Europäisches Patentamt

European Patent Office

Office européen des brevets

(11) Numéro de publication: **0 345 188**
**A1**

## (12) DEMANDE DE BREVET EUROPEEN

(21) Numéro de dépôt: 89440050.6

(22) Date de dépôt: 02.06.89

(51) Int. Cl.⁴: **G 01 K 13/02**
G 01 L 11/00

(30) Priorité: 03.06.88 FR 8807596

(43) Date de publication de la demande:
06.12.89 Bulletin 89/49

(84) Etats contractants désignés:
AT BE CH DE ES GB IT LI LU NL SE

(71) Demandeur: Industrie-Werke Karlsruhe Augsburg
Aktiengesellschaft
Gartenstrasse 71
D-7500 Karlsruhe 1 (DE)

(72) Inventeur: **Mall, Horst**
Haid und Neu Strasse 58 D
D-7500 Karlsruhe (DE)

Bellil, Hédi
62, avenue Bourguiba
5160 El Jem (TN)

Herzog, Jean-Philippe
28, rue du Florimont
68230 Turckheim (FR)

Meyrueis, Patrick
31, Boulevard de l'Orangerie
67000 Strasboug (FR)

(74) Mandataire: **Metz, Paul**
Cabinet METZ PATNI 63, rue de la Ganzau
F-67100 Strasbourg (FR)

(54) Ensemble de détection et de mesure simultanées de la pression et de la température dans un fluide sous pression.

(57) Ensemble de détection et de mesure pour fluide sous pression.

Ensemble caractérisé en ce qu'il comprend au moins deux couples (16) et (17) de deux fibres optiques dont une fibre de référence pour chaque couple présentant chacune un enroulement (12, 13) et (14, 15) présent dans des cellules respectives (10) et (11) dans lesquelles règnent une température donnée et une pression donnée, cellule en communication avec le fluide à mesurer, dans les fibres étant injecté un faisceau de lumière cohérente à partir d'un laser (22), on observe en sortie des fibres disposées en mode interférentiel, les franges d'interférence à l'aide d'une caméra et on enregistre leur défilement dans un système informatique.

Cette invention intéresse les fabricants de capteurs et sondes et leur système d'exploitation.

FIG.1

Bundesdruckerei Berlin

EP 0 345 188 A1

## Description

La présente invention se rapporte à un ensemble de détection et de mesure de la température et de la pression dans un fluide sous pression, notamment en mouvement, comprenant un capteur à fibres optiques et un système de mesure différentielle par interférométrie laser.

La mesure de température sur site s'effectue classiquement par l'intermédiaire de capteurs appelés également sondes dans certains cas.

Selon le domaine technique et l'environnement, il s'agit de jauges de contact, de capteurs à thermocouple et, pour des températures plus élevées, de capteurs à dilatation de solide.

Pour des températures encore plus élevées, par exemple de fusion des solides, on emploie des pyromètres à large bande. Ces pyromètres analysent le spectre de la lumière émise et fonctionnent à la manière d'un spectromètre.

La température des fluides sous pression et en mouvement est habituellement mesurée par des sondes dites sondes capillaires car elles contiennent une capsule protégée remplie d'un fluide de dilatation, reliée à un organe de mesure par un conduit capillaire. La dilatation du fluide est transmise à un élément sensible par l'intermédiaire du conduit capillaire.

Selon l'emplacement de la chambre, on mesure la température plus ou moins profondément dans la section de la conduite transportant le fluide.

Ce type de capteur ne présente pas la précision et la fiabilité voulues. De plus, la gamme des températures mesurables est réduite.

Par ailleurs, pour mesurer la pression, on utilise soit un capteur à membrane, soit un transducteur à modulation de pression du type par exemple piézo-électrique.

Si le premier type de capteur s'avère fragile, le second se montre particulièrement sensible à l'environnement, notamment aux paramètres électromagnétiques présents dans tous les milieux, industriels ou urbains.

De plus, deux inconvénients importants en limitent l'emploi.

Il s'agit d'abord de la gamme des pressions mesurables qui s'avère étroite et conduit, en cas de dépassement, à la destruction du capteur. Il s'agit ensuite de la sensibilité à la température qui apporte dans certains cas une dérive des mesures qu'il convient de compenser. On y arrive plus ou moins bien.

L'ensemble de détection et de mesure selon l'invention a pour but de remédier à ces différents inconvénients et d'apporter des qualités et avantages nouveaux dans la mesure simultanée de la température et de la pression d'un fluide sous pression en mouvement ou statique notamment pour analyser en temps réel la structure d'écoulement d'un fluide guidé.

A cet effet, l'ensemble de détection et de mesure selon l'invention se caractérise en ce qu'il comprend au moins deux couples de deux fibres optiques dont une fibre de référence pour chaque couple présentant chacune un enroulement présent dans des cellules respectives dans lesquelles règnent une température donnée et une pression donnée en communication avec la conduite ou l'enceinte dans laquelle se trouve le fluide à mesurer, dans les fibres étant injecté un faisceau de lumière cohérente, de longueur d'onde compatible avec la nature de la fibre et en ce que l'on observe, en sortie des fibres disposées en mode interférentiel, les franges d'interférence à l'aide d'une caméra et on enregistre leur défilement dans un système informatique.

L'ensemble selon l'invention peut être utilisé en détection à des fins de surveillance dans le cadre d'une installation de sécurité ou à des fins de mesure, par exemple de la quantité d'énergie transmise dans une conduite par l'exploitation des données de température et de différence de pression entre des points caractéristiques.

A cet effet, les domaines d'application visés par l'invention sont, de façon non exhaustive, les suivants :
. réseaux urbains de distribution de fluide ,
. transport de fluides énergétiques : surveillance des gazoducs et des pipelines ,
. surveillance et mesures dans les installations de production, en raffinerie, dans les industries chimiques, agro-alimentaires ,
. mesures statiques ou dynamiques dans les appareils et montages de laboratoires ;
. possibilité d'analyser en temps réel la structure d'écoulement d'un fluide guidé.

La présente invention trouve une application optimale dans tous les domaines précités en raison de ses nombreux avantages dont on citera ci-après les principaux :
. indépendance totale par rapport aux parasites d'ordre électromagnétique ,
. grande gamme de mesures couvrant des valeurs de température des plus basses jusqu'à celles de destruction de la fibre optique ,
. précision importante ,
. fiabilité élevée.

La présente invention sera bien comprise à la lecture de la description qui suit, effectuée à titre d'exemple non limitatif sur un mode d'exécution en référence aux dessins accompagnants dans lesquels :

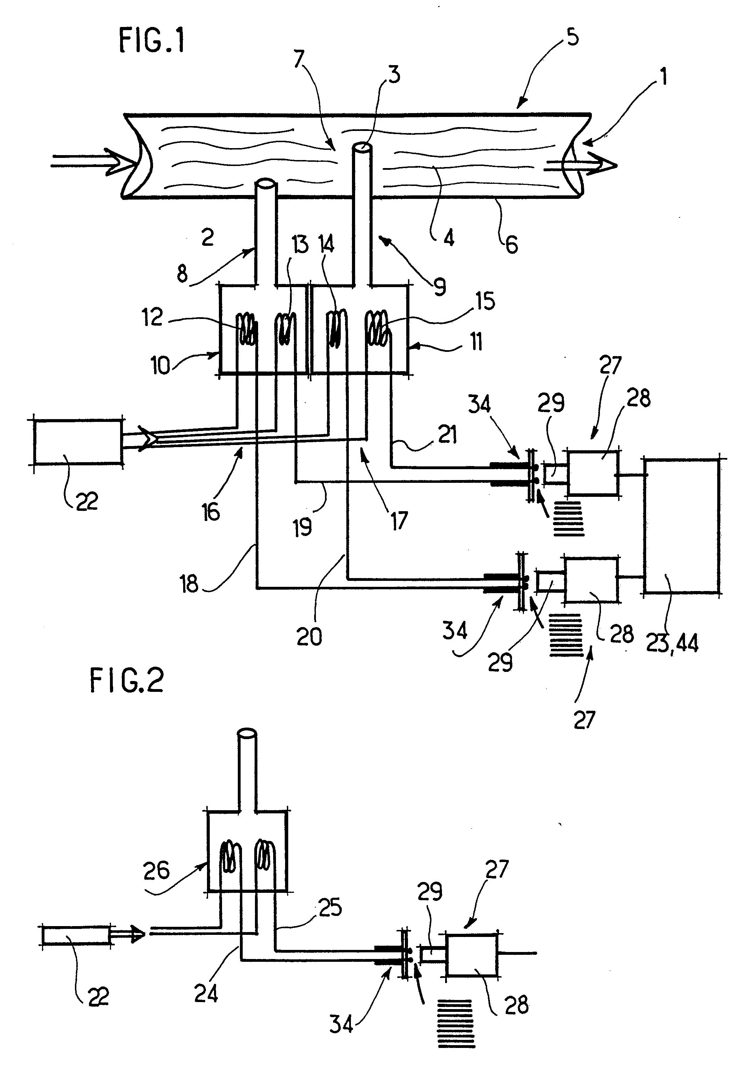

. la figure 1 est le schéma du montage de base à deux cellules de mesure ;

. la figure 2 est le schéma du montage de base à deux fibres revêtues ;

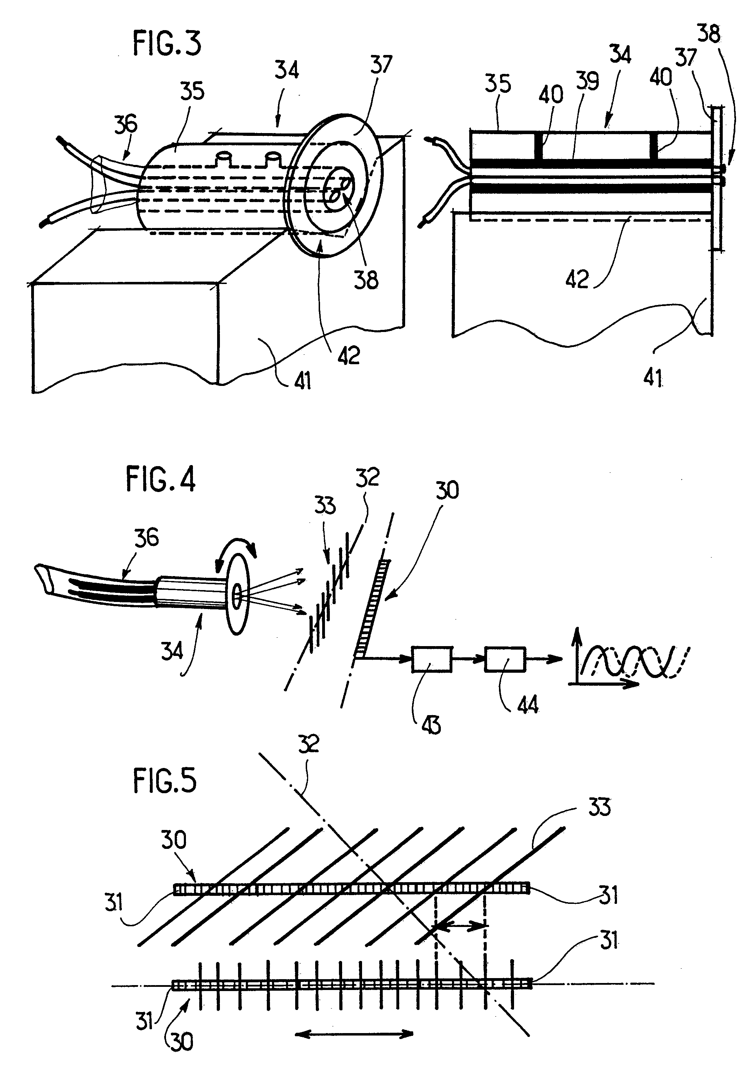

. la figure 3 est une vue double en perspective schématique et en coupe longitudinale du support d'orientation des extrémités des fibres devant le détecteur optique ;

. la figure 4 est le schéma de la suite des éléments de mesure ;

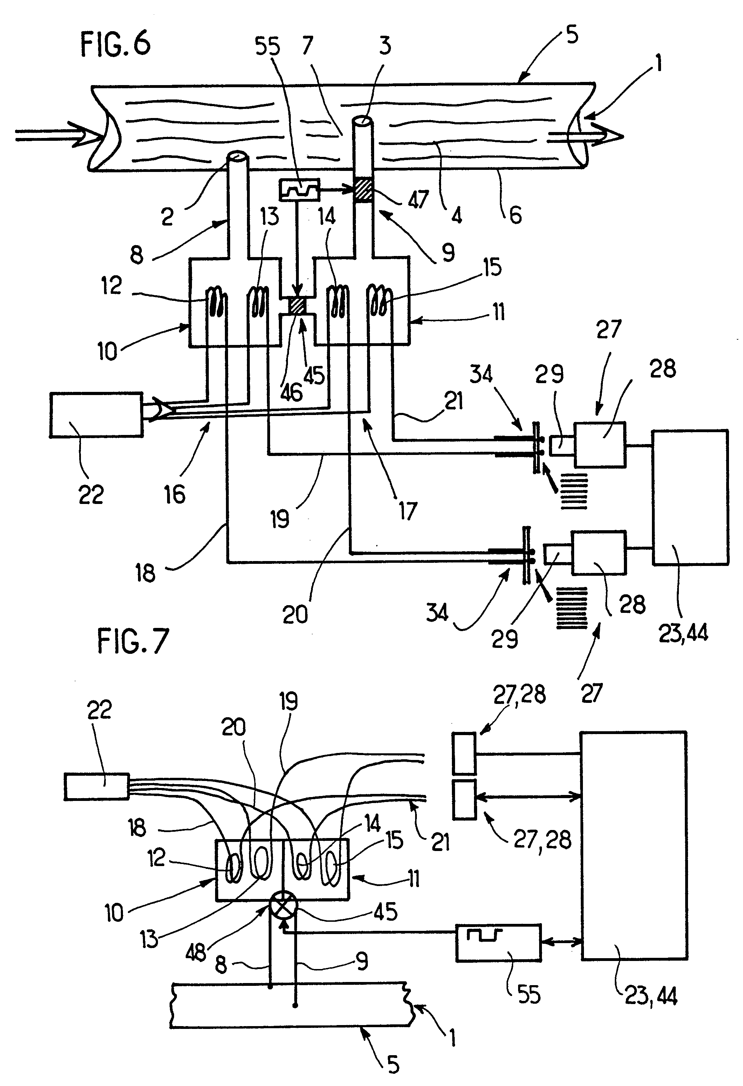

. la figure 5 est une vue illustrative double montrant la position de la barrette de détection par rapport à l'axe de défilement des franges et en comparaison des franges et de la barrette à deux axes confondus ;

. la figure 6 est une vue schématique du montage explicatif de base selon un perfectionnement appliqué au montage de la figure 1 ;

. la figure 7 est un schéma d'application du montage d'utilisation de base mettant en oeuvre un organe unique d'obturation-ouverture fluidique ;

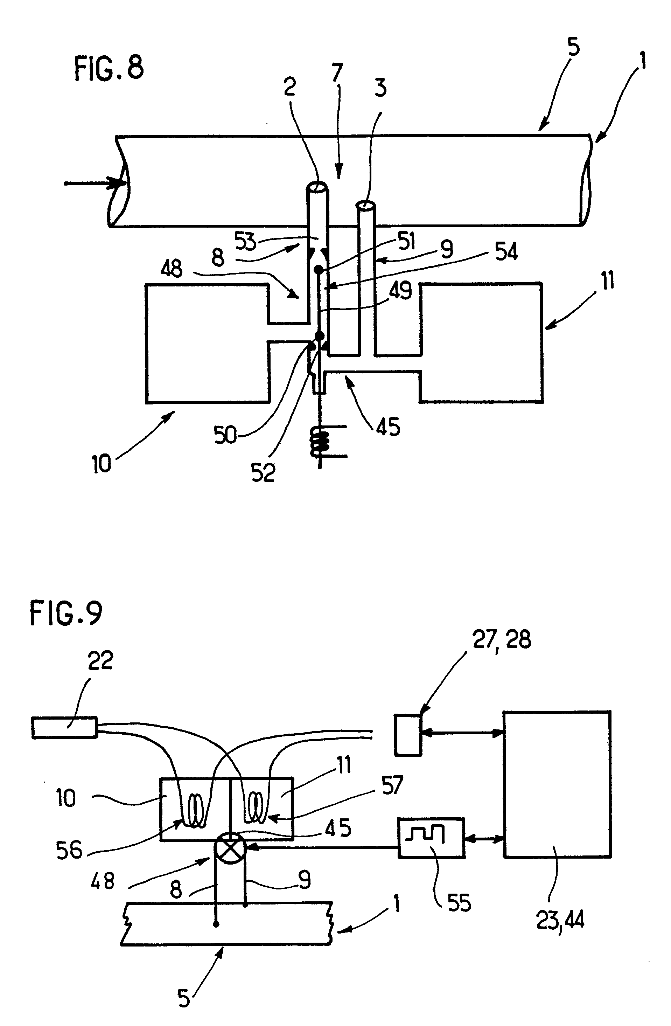

. la figure 8 est une représentation schématique d'un organe fluidique unique à double effet ;

. la figure 9 est un schéma d'un montage à un seul couple de fibres ;

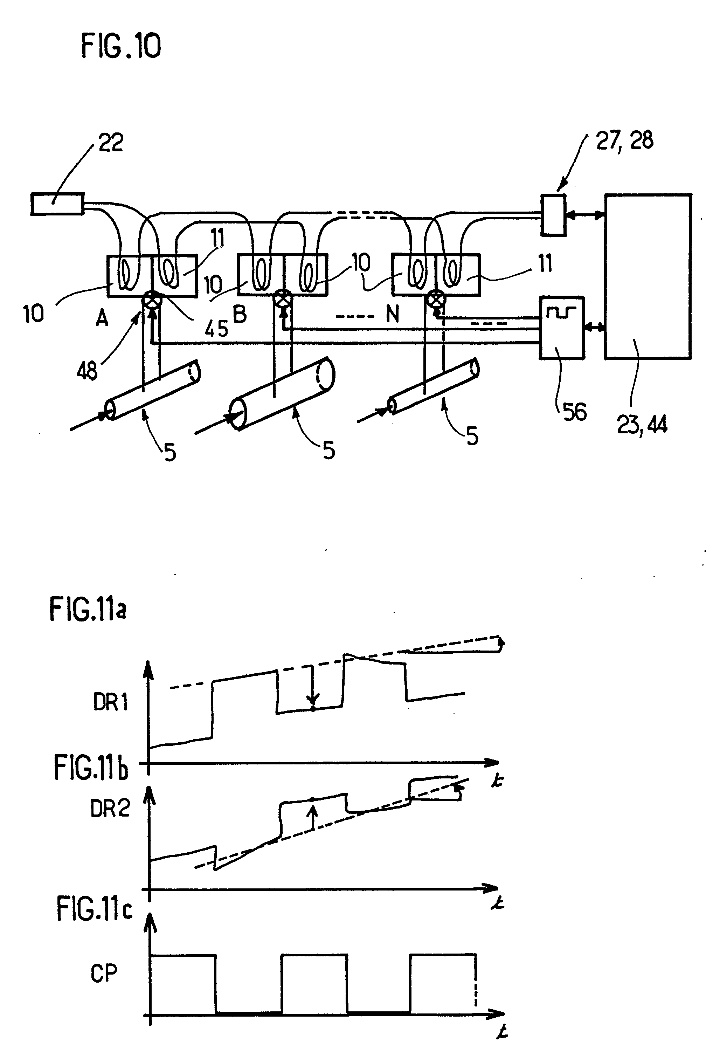

. la figure 10 est un schéma d'un troisième montage d'utilisation permettant une application à un réseau de plusieurs capteurs extensible à un grand nombre de capteurs ;

. les figures 11 sont regroupées sous la forme d'une suite de diagrammes représentant les dérives dans le temps à partir des commandes de l'organe d'obturation:

- figure 11a : dérive des franges du premier couple ;

- figure 11b : dérive des franges du deuxième couple ;

- figure 11c : commande de l'organe d'obturation.

Les effets de la température et de la pression sur le défilement des franges d'interférence dans un montage interférométrique sont de même nature et donc indiscernables. Dès lors, toute variation de la différence de pression ou de la différence de température et inversement entre les zones sensibles, c'est-à-dire non isolées, peut être confondue.

Le but de la présente invention est d'arriver à les dissocier.

L'idée générale inventive consiste à réaliser simultanément la mesure des différences de pression et de température entre deux points de mesure situés à des endroits différents dans un même fluide sous pression à partir d'un montage d'exploitation de deux couples de fibres disposés chacun en mode interférentiel.

On décrira ci-après deux montages de base permettant d'obtenir la décorrélation de la pression et de la température entre deux points de mesure.

En référence à la figure 1, on détecte et on mesure dans un milieu 1 la différence de pression et de température entre deux points 2 et 3 dans un fluide 4 sous pression par exemple en mouvement dans une conduite 5 présentant une paroi 6.

Les deux points de mesure 2 et 3 sont situés, par exemple, pour le premier au niveau de la paroi 6 de la conduite 5 servant de point de référence et, pour le second, en partie centrale 7 de la conduite 5.

Les points de mesure 2 et 3 constituent les extrémités de conduits 8 et 9 communiquant avec des cellules de mesure respectivement 10 et 11.

Ces cellules sont étanches et communiquent, par les conduits 8 et 9, avec le fluide à la pression et à la température régnant au niveau des points de mesures 2 et 3.

Chaque cellule est traversée par deux enroulements de mesure, respectivement 12 et 13 pour la première cellule, et 14 et 15 pour la deuxième cellule, correspondant à chaque fois à un couple 16 ou 17 de deux fibres optiques 18,19 et 20,21 différentes entre elles pour une même cellule, mais de mêmes propriétés deux à deux entre chaque couple de manière à constituer pour chaque couple une fibre de référence.

On injecte dans toutes les fibres optiques un faisceau de lumière cohérente à partir au moins d'une source, par exemple un laser 22, on observe et on exploite, en sortie de chaque couple de fibres disposées en mode interférentiel, les franges d'interférence et leur défilement.

Les extrémités des fibres d'un même couple sont juxtaposées et orientées, pour chaque couple, par un dispositif approprié et observées, par couple, par un détecteur optique, par exemple une caméra dont il sera question ci-après, constituant ainsi deux voies.

Le recouvrement des faisceaux transportés par chacune des fibres d'un même couple donnent naissance à des franges d'interférence et les variations des grandeurs à mesurer produisent leur déplacement qui sont observés, pour chaque couple, par un détecteur optique et transmis simultanément à un calculateur commun 23 pour compter les franges en défilement et résoudre les équations de décalage des phases puis donner les valeurs des différences de températures et de pression indépendamment l'une de l'autre entre les deux points de mesure.

Comme le montre clairement la figure 1, il existe deux voies de mesure formées des deux couples de fibres optiques des deux cellules de mesure et des deux détecteurs optiques reliés au même calculateur.

Un autre montage, représenté sur la figure 2, mettant en oeuvre deux fibres revêtues 24 et 25 de matériaux différents de façon qu'elles conservent chacune la même sensibilité à la température, mais des sensibilités différentes à la pression permet, de façon analogue, de mesurer la pression décorrélée des effets de la température, dans une seule cellule de mesure 26 contenant les deux fibres. La différence avec le montage précédent consiste en ce que l'on ne mesure que l'effet de la pression et non celui de la température qui est éliminé par ce montage particulier.

Ce montage permet de s'affranchir des effets de la température en cas de mesure de la pression dans une enceinte ou dans une conduite. Il en serait de même, mais inversement, pour les effets de la pression dans le cas de mesures de la température.

La mesure s'effectue également par interférométrie et grâce au revêtement approprié des fibres, par exemple de l'aluminium siliconé ou autre, le décalage de phase est indépendant des variations de la température en raison de la compensation apportée par l'identité de sensibilité à la température des deux fibres.

Il y a lieu, bien entendu, si l'on veut disposer des valeurs de la pression et de la température, de prévoir deux montages et de les exploiter individuellement.

Une des particularités du système, comme dans le cas précédent, concerne l'observation de l'extrémité des fibres à l'aide d'un détecteur optique 27, par exemple du type caméra 28, comprenant un objectif 29 et une seule barrette 30 d'éléments photosensibles ponctuels tels que 31 par exemple du type à cellules à transfert de charge.

De façon originale, cette barrette est utilisée en disposition oblique relative par rapport à l'axe longitudinal 32 de défilement des franges d'interférence 33 de manière à augmenter, par une meilleure résolution spatiale, la précision des mesures.

Cette orientation est réalisée à l'aide d'un support d'orientation 34 réunissant les extrémités des deux fibres et permettant d'en modifier la présentation devant la caméra et ainsi d'incliner l'axe de défilement des franges par rapport à celui de la barrette 30 d'éléments photosensibles 31 comme le montre la figure 5. Cette caractéristique originale permet de mesurer jusqu'à des déplacements de quelques fractions de franges à l'aide du système de détection et d'analyse.

En effet, on obtient, par cette disposition, un plus grand nombre d'éléments photosensibles impressionnés par une seule frange et donc une meilleure résolution dans la connaissance de leur position.

Comme le montre la figure 5, la précision peut ainsi être pratiquement doublée.

Un des modes de réalisation du dispositif d'orientation, représenté plus particulièrement sur la figure 3, est susceptible de variations. Il comporte, de façon non limitative, un manchon 35 pour le guidage et l'immobilisation par l'enserrement ou l'immobilisation des fibres entre elles et au corps du manchon dans lequel elles arrivent protégées par une gaine extérieure commune 36 et rendues prisonnières et une collerette de manoeuvre 37 montée perpendiculairement au manchon sur le côté correspondant à l'extrémité des fibres formant un doublet 38.

La solidarisation résulte de l'injection d'une colle appropriée 39 par au moins un conduit 40.

Le manchon est maintenu dans un support 41 comportant une gorge réceptrice 42 dans laquelle il se trouve calé. La simple rotation de la collerette permet d'orienter l'axe du doublet 38 formé par les points d'extrémité des fibres par rapport à la barrette de détection.

La gaine extérieure 36 est présente sur toutes les zones exposées à des variations de température ou de pression. Elle constitue une isolation par rapport aux perturbations extérieures. En raison de la grande précision des mesures, il importe que l'isolation soit suffisante.

En référence à la figure 4, le système d'exploitation comprend par exemple un convertisseur vidéo-analogique/signal numérique 43, suivi d'un microprocesseur 44 effectuant le comptage de défilement des franges et la résolution de l'équation de décorrélation des deux variables : température et pression.

Selon un perfectionnement, on prévoit une liaison fluidique obturable et ouvrable sur commande à distance entre les deux cellules de mesure et une action inverse d'ouverture-obturation sur au moins une liaison entre une des cellules et la conduite 5 à surveiller en vue d'établir instantanément une différence de pression nulle entre les deux cellules de mesure.

Les moyens généraux employés concernent une liaison fluidique entre les deux cellules de mesure, dans laquelle est insérée une électrovanne. Au moins une autre électrovanne commandée en inverse est prévue dans l'une ou l'autre liaison de communication entre chaque cellule et la conduite où s'écoule le fluide à surveiller.

Avantageusement, des actions inverses exercées sur les deux liaisons fluidiques seront effectuées par un organe unique de commutation fluidique à double effet dont l'élément mobile pourra réaliser simultanément une ouverture par l'une de ses extrémités et une fermeture par son extrémité opposée respectivement dans la liaison fluidique intercellule et dans la liaison fluidique entre l'une ou l'autre cellule et la conduite à surveiller.

Plus précisément, en référence aux figures de 6 à 11, on prévoit une liaison fluidique 45 entre les cellules 10 et 11 de mesure reliées chacune respectivement par les conduits 8 et 9 aux points de mesure 2 et 3 dans le milieu 1. On mesure par exemple la différence de pression et de température entre les deux points 2 et 3 dans le fluide 4 sous pression en écoulement dans la conduite 5.

Selon l'invention, la liaison fluidique 45 entre les cellules est équipée d'un organe fluidique d'obturation et d'ouverture séquentielles tel que 46, par exemple une électrovanne commandable à distance. De plus, au moins un des conduits 8 ou 9 comporte également un organe fluidique d'obturation-ouverture tel que 47, fonctionnant ou commandé en inverse à l'électrovanne 46.

De façon avantageuse, il s'avère possible, comme représenté schématiquement sur la figure 8, de réaliser les fonctions d'ouverture-obturation par un seul organe 48 de commutation fluidique en ouverture-obturation. Cet organe possède un élément mobile 49 d'ouverture-obturation dont une extrémité 50 agit au niveau de la liaison 45 et dont une autre extrémité 51 obture ou libère un des conduits 8 ou 9 de liaison entre l'une ou l'autre des cellules et la conduite à surveiller 5.

Cet élément mobile 49 fonctionne à la manière d'un va et vient entre deux sièges 52 et 53 tel un double clapet 54 et permet donc de remplir la double fonction d'ouverture-obturation à deux niveaux différents, c'est-à-dire sur deux voies différentes.

On retrouve les mêmes éléments de mesure et d'analyse du brevet principal, à savoir : un laser 22 dont le faisceau émis est injecté dans chaque couple de fibres optiques 16 ou 17 des deux fibres 18, 19 et 20, 21 dont les extrémités sont regroupées par le dispositif d'orientation 34 et observées par le détecteur optique 27, par exemple à une seule barrette d'éléments photosensibles ponctuels.

Ce montage est complété par une horloge 55 en liaison avec le calculateur et l'unité de commande 23, en vue de la commande séquentielle de l'organe fluidique unique 48 ou des organes fluidiques 46 et 47 d'ouverture-obturation.

Un autre montage représenté sur la figure 9 procède du même principe, mais concerne un montage simplifié qui met en oeuvre seulement un couple d'une seule fibre permettant aussi, grâce à la mise en communication périodique des deux cellules, de s'affranchir des variations de la température et des dérives. En raison de l'existence d'un seul couple d'enroulements 56 et 57 de fibres, il ne nécessite qu'un seul montage interférométrique de mesure.

La figure 10 représente un montage plus général permettant de surveiller et de mesurer successivement et périodiquement les variations de température et de pression dans plusieurs conduites.

Il suffit de monter les enroulements en série et l'organe fluidique de chaque couple de cellules de mesure sera commandé séquentiellement et périodiquement à partir d'une horloge unique multivoies 58 en liaison avec l'unité 23.

Ce montage permettant le multiplexage peut être étendu à un nombre important de couples de cellules de mesure formant un capteur et de conduites à surveiller, sa seule limite étant celle de la capacité de gestion et de contrôle de l'unité 23.

On a représenté sur la figure 10 une suite indéfinie de A,B...N d'ensembles capteurs-conduites afin d'illustrer les grandes possibilités d'extension du système.

On peut se rendre compte des dérives des franges correspondantes en se référant aux figures 11.

Afin de s'affranchir des dérives du zéro dans le temps, dans l'une et l'autre des cellules de mesure, on effectue périodiquement une remise à zéro des pressions dans les deux cellules en les mettant en communication fluidique.

Les figures 11 ont pour but de visualiser dans le temps (variable "t") les dérives des franges et du zéro dans l'une et l'autre cellule à partir d'une commande périodique CP de l'organe fluidique d'ouverture-obturation.

Les amplitudes des dérives des franges dans les première et deuxième cellules DR1 et DR2 sont représentées par des flèches verticales tandis que les dérives du zéro sont représentées par des lignes pointillées et des flèches courbes illustrant l'angle de dérive par rapport à l'horizontale.

La dérive des franges, due aux effets précédemment mentionnés, peut donc, selon le présent perfectionnement, être compensée périodiquement pour une plus grande justesse et précision des mesures.

## Revendications

1. Ensemble de détection et de mesure simultanées des valeurs de la pression et de la température dans un fluide sous pression, notamment en mouvement caractérisé en ce qu'il se compose de deux cellules de mesure (10) et (11), en communication chacune par un conduit (8) ou (9), avec un milieu (1) renfermant un fluide (4) se terminant par un point de mesure respectivement (2) ou (3), chaque point de mesure étant situé à un niveau différent, ledit ensemble se composant en outre de deux couples (16) et (17) de deux fibres optiques (18, 19) et (20), (21), chaque couple comprenant deux fibres de mesure, chaque fibre de chaque couple traversant la cellule correspondante en formant un enroulement (12, 13) et (14, 15), et en ce que dans chacune des dites fibres est injecté, à l'une de leurs extrémités, un faisceau de lumière cohérente, les extrémités de chaque fibre de chaque couple de fibres optiques étant disposées en mode interférentiel et observées par un détecteur optique (27) constituant ainsi deux voies de détection et de mesure en vue de transmettre à un calculateur les informations optoélectroniques concernant le défilement des franges résultant de la superposition des deux faisceaux traversant les fibres optiques de chaque couple soumises aux variations de pression et de température pour décorréler et mesurer individuellement les différences de pression et de température entre les deux points de mesure (2) et (3).

2. Ensemble selon la revendication 1 caractérisé en ce que les points de mesure (2) et (3) sont les extrémités des conduits (8) et (9).

3. Ensemble selon les revendications 1 et 2 caractérisé en ce que les points de mesure (2) et (3) sont situés au niveau de la paroi (6) et en partie centrale (7).

4. Ensemble selon la revendication 1 caractérisé en ce que les détecteurs optiques (27) sont des caméras (28) comportant chacune une barrette (30) d'éléments photosensibles (31).

5. Ensemble selon les revendications précédentes caractérisé en ce que les axes de défilement (32) des franges (33) sont orientés en oblique par rapport aux axes longitudinaux des barrettes (30).

6. Ensemble selon la revendication 5 caractérisé en ce que les extrémités de chaque couple de fibres sont maintenues par un dispositif d'orientation (34).

7. Ensemble selon la revendication 6 caractérisé en ce que le dispositif d'orientation (34) est un manchon d'enserrement ou de scellement (35) terminé par une collerette de manoeuvre (38).

8. Ensemble selon la revendication 1 caractérisé en ce que les fibres sont revêtues et comprises, pour un couple unique, dans une seule cellule de mesure.

9. Ensemble selon la revendication 1 caractérisé en ce que les fibres de chaque couple sont protégées en dehors des cellules de mesure par une gaine isolante (36).

10. Ensemble selon les revendications précédentes caractérisé en ce que le système d'exploitation comprend après chaque caméra un convertisseur vidéo-analogique/signal numérique (43) suivi d'un microprocesseur (44).

11. Ensemble selon les revendications précédentes, caractérisé en ce qu'il comporte un passage fluidique (45) entre les deux cellules de mesure (10) et (11), ouvrable et obturable sélectivement à distance par un organe d'ouverture-obturation fluidique commandable à distance, ledit organe étant commandé momentanément ou périodiquement et agissant également sur l'un des conduits de liaison (8) ou (9) entre l'une ou l'autre des cellules (10) ou (11) et la conduite (5) à surveiller ou étant complété par un organe fluidique distinct (47) commandé en inverse.

12. Ensemble selon la revendication 11, caractérisé en ce que le ou les organes d'obturation fluidique est ou sont une ou des électrovannes.

13. Ensemble selon les revendications 11 et 12, caractérisé en ce que l'organe d'obturation fluidique est unique (48).

14. Ensemble selon les revendications de 11 à 13, caractérisé en ce que l'élément (49) d'obturation-ouverture de l'électrovanne est commun au passage fluidique (45) entre les deux cellules et à l'un des conduits (8) ou (9) entre l'une ou l'autre des cellules et la conduite à surveiller (5) et en ce que l'une des extrémités de l'élément d'obturation-ouverture (49) de l'électrovanne obture le passage fluidique (45) tandis que son autre extrémité ouvre le conduit entre l'une ou l'autre des cellules (10) ou (11) et la conduite (5) à surveiller ou inversement.

15. Ensemble selon les revendications précédentes caractérisé en ce que l'organe fluidique est commandé par une horloge (55) en liaison avec l'unité de calcul et de commande (23).

16. Ensemble de détection et de mesure de la pression et de la température dans un fluide sous pression selon les revendications précédentes, caractérisé en ce que chaque capteur formé de deux cellules de mesure ne comporte qu'un seul couple de deux fibres.

17. Ensemble selon la revendication 16 caractérisé en ce que les capteurs sont individuels en une suite linéaire, traversés par des enroulements en série et exploités par une seule unité (23), lesdits organes fluidiques étant commandés successivement par une horloge unique (56)

FIG.1

FIG.2

FIG.3

FIG.4

FIG.5

FIG.6

FIG.7

FIG.8

FIG.9

# FIG.10

# FIG.11a

DR1

# FIG.11b

DR2

# FIG.11c

CP

**Office européen**

**des brevets**

# RAPPORT DE RECHERCHE EUROPEENNE

Numero de la demande

EP  89 44 0050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 611 119  (FRAUNHOFER)<br>* Colonne 3, ligne 54 - colonne 7, ligne 25; figures *<br>--- | 1,10 | G 01 K  13/02<br>G 01 L  11/00 |
| A | US-A-4 375 164  (HALLIBURTON CO.)<br>* Colonne 4, ligne 42 - colonne 7, ligne 11; figures *<br>--- | 1,10 | |
| A | DE-A-3 321 217  (PHÖNIX ARMATUREN WERKE)<br>* Page 7, ligne 31 - page 8; figures *<br>--- | 1,9 | |
| A | EP-A-0 021 199  (TOKYO SHIBAURA)<br>* Résumé; figures *<br>--- | 1 | |
| A | US-A-4 564 289  (GEO-CENTERS INC.)<br>* Colonne 5, lignes 15-47; figures 1,4 *<br>--- | 1,8 | |
| A | PATENT ABSTRACTS OF JAPAN, vol. 9, no. 90 (P-350)[1813], 19 avril 1985, page 156 P 350; & JP-A- 59 218 915 (YOKOGAWA HOKUSHIN DENKI K.K.) 10-12-1984<br>* Résumé *<br>--- | 1 | **DOMAINES TECHNIQUES RECHERCHES (Int. Cl.4)** |
| A | OPTICAL FIBER SENSORS - 1988 TECHNICAL DIGEST SERIES, New Orleans, Louisiana, 27-29 janvier 1988, vol. 2, partie 2, pages 495-501, Optical Society of America, Washington, D.C., US; D. CHARDON et al.: "Simultaneous measurement of temperature and pressure variations with a single mode fiber"<br>* En entier *<br>----- | 1,10 | G 01 K<br>G 01 L<br>G 01 D |

Le présent rapport a été établi pour toutes les revendications

| Lieu de la recherche | Date d'achèvement de la recherche | Examinateur |
|---|---|---|
| LA HAYE | 20-09-1989 | RAMBOER P. |